# EUROPEAN PATENT APPLICATION

(11) **EP 1 100 018 A2**
(43) Date of publication of application: **16.05.2001**
(21) Application number: 00310046.8
(22) Date of filing: 10.11.2000
(51) Int. Cl.: G06F 12/06

(54) **USB-Interface Equipped Device**

(30) Priority: 11.11.1999 JP 32042699; 12.11.1999 JP 32295599; 12.11.1999 JP 32226799; 24.11.1999 JP 33347699
(71) Applicant: SANKYO SEIKI MFG. CO. LTD., Suwa-gun, Nagano-ken 393-8511 (JP)
(72) Inventor: Komatsu, Tetsuro, Sankyo Seiki Mfg. Co., Ltd., Suwa-gun, Nagano, 393-8511 (JP); Obinata, Eiichi, Sankyo Seiki Mfg. Co., Ltd., Suwa-gun, Nagano, 393-8511 (JP)
(74) Representative: Kinsler, Maureen Catherine

(57) **Abstract**

A method for communication control of a USB-equipped device that has a vendor identification (VID), a product identification (PID) and a device identification number (DID) that is different from the VID and PID. The method comprises transmitting the DID, together with the VID and the PID to a host computer when the USB-equipped device is plugged in; identifying in the host computer the model of the USB-equipped device based on the transmitted VID and PID and identifying a USB-equipped device as a target of communication among a plurality of USB-equipped devices using the DID transmitted, thereby to established communication with said USB-equipped device.

## Description

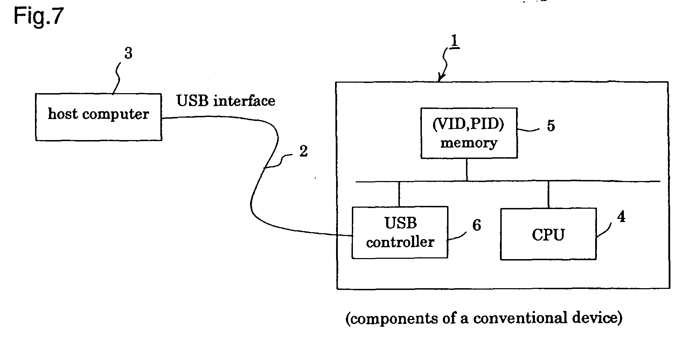

A Universal Serial Bus (USB) interface is known as one of the interfaces to connect a computer and peripherals. Fig. 7 shows a schematic configuration of a system connected via the USB. Herein, USB-equipped device 1 to be controlled is connected to host computer 3 via USB interface 2. USB-equipped device 1 to be controlled is comprised of CPU 4, memory 5, and USB controller 6. A communication circuit can be created between USB-equipped device 1 and host computer 3 via USB interface 2 and USB controller 6. Based on commands from host computer 3, USB-equipped device 1 performs a given control operation. Memory 5 of USB-equipped device 1 contains a VID and PID which will be needed for host computer 3 to specify the device.

USB-equipped device 1, which carries out communication with host computer 3, transmits the VID and PID to host computer 3 during the plug-in process (establishing a physical connection). With host computer 3, a hardware device driver specific to the plugged-in device, which is specified by the VID and PID, is loaded and built into the operating system. As a result, the operating system is prepared to establish a connection with the device by executing the application program. When the application program is executed, the loaded hardware device driver is called such that a communication circuit is created with the connected device.

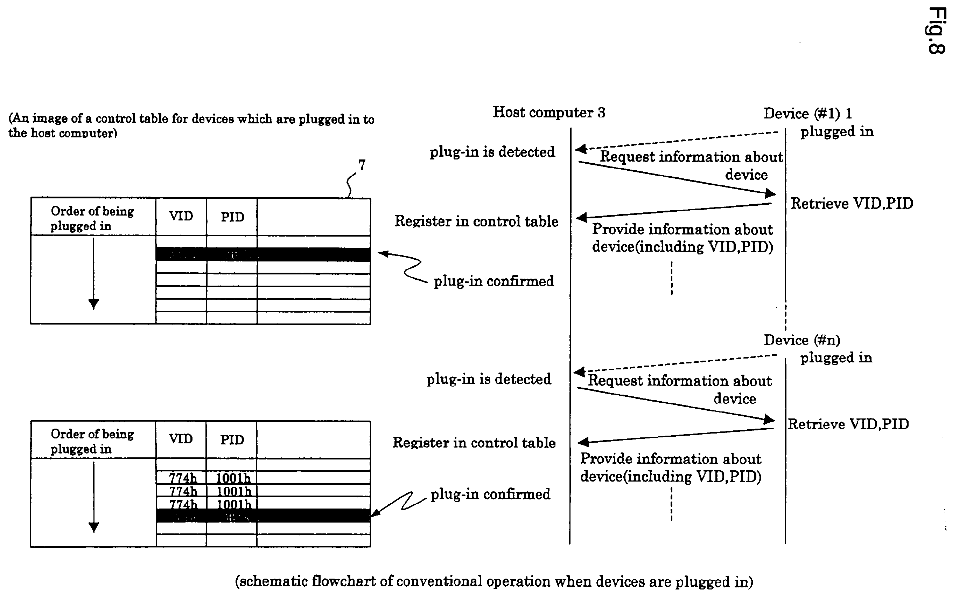

Fig. 8 shows the processing operation when a device is connected. As shown in the figure, when multiple devices are plugged in, the VID and PID of each device are stored in order of being plugged in within control table 7 in memory 5 of host computer 3. Therefore, host computer 3 can create a communication circuit by specifying a device as a target of communication based on the stored VIDs and PIDs.

The configuration of the USB does not limit the plug-in process of multiple devices of the same product (or model), in other words, devices having the same VID and PID. However, a user's application program may not have a means effective in identifying multiple devices of the same product (or model) which are plugged in to the host computer. As a result, the host computer cannot distinguish one device from another, causing the possibility that a connection may not be established with a device as a target of communication.

Naturally, those devices may be controlled by means of a control table in which the devices are aligned in order of being plugged in, as shown in Fig. 8. Nonetheless, the order of the devices of being plugged in may be changed afterward (in other words, there may be a change in the position of the device of being connected to the host computer via a USB hub). In this case, the host computer cannot identify the relative positions of the devices being connected. Therefore, it is not realistic to identify multiple devices of the same product (or model) according to the order of being plugged in.

In order to solve the above issue, it is suggested to assign a different PID to each device even though devices are of the same product (or model), for example. According to this method, the devices are recognized as different devices although for users they are of the same product (or model) in terms of the software. However, this is not desirable as maintenance of devices become extremely complex for both vendors and users.

The purpose of the present invention is, considering the above issue, to provide a method for communication control of devices, which are connected to a host computer via a USB interface, wherein it distinguishes multiple devices of the same product (or model).

The purpose of the present invention is also to provide a USB-equipped device which is suitable for the use of such a method.

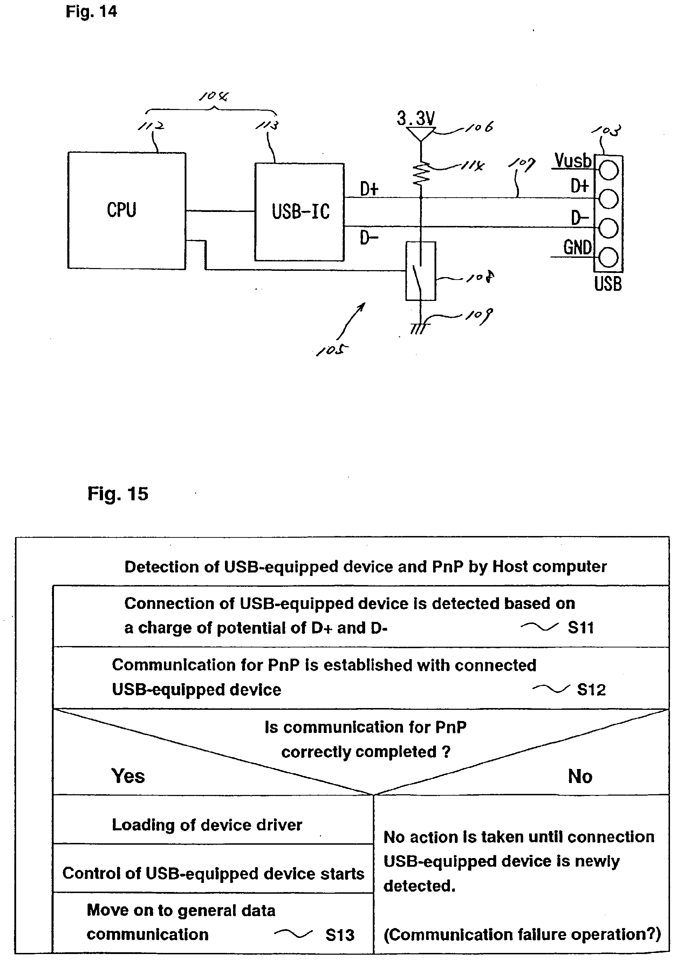

Also, in general, the above mentioned USB-equipped devices have Plug and Play (PnP) enabling an automatic system configuration. Therefore, a user neither needs to change settings of the host computer to correspond to peripherals nor needs to reboot the host computer. When the USB-equipped device is connected to the host computer, as shown in Fig. 15, the host computer detects the USB-equipped device being connected when an electric change is detected (Step 11), followed by electric communication (hereafter, "USB communication") between USB terminals (Step 12). After confirming the type of the USB-equipped device, the host computer calls a corresponding driver to establish a system for USB communication. The communication with the USB-equipped device is repeated as necessary as long as the communication is enabled (Step 13).

On the other hand, when the host computer detects an error in the USB communication, the host computer can try to restore the line to the USB-equipped device with a communication error, only if the host computer has a USB control program capable of doing so. For example, when an error occurs in the USB communication, the USB control program of the host computer retries the PnP after a bus reset. If the communication is restored by the trial, the system may be reestablished.

However, the host computer is configured such that the USB communication is established from the host computer side, but not from the USB-equipped device side. When the host computer determines that there is a communication error and that the USB-equipped device is the source of the error, the host computer may try to restore the communication with the USB-equipped device. In contrast, when the USB-equipped device determines that the communication error is caused by the host computer, the USB-equipped device cannot start the communication until the host computer restores the communication by some means (e.g. someone reboots the host computer).

When the host computer cannot detect the communication error caused by the USB-equipped device, the USB-equipped device detects its own error by a watchdog timer such that the USB-equipped device may try to restore the communication by reinitializing itself including the USB communication. However, the USB communication is a one-way process from the host computer to the USB-equipped device. Therefore, the USB-equipped device cannot start the communication with the host computer or initialize the USB communication. In other words, in spite of the possibility of the USB-equipped device to restore the USB communication, the USB-equipped device cannot actively initiate any means to restore the USB communication.

In this case, it is known that the USB communication can be artificially restored, although it is not a complete restoration, by removing and reconnection of the USB cable terminal from / to the USB connector of the USB-equipped device. However, it is very inefficient to remove and reconnect the cable terminal every time a communication error occurs. Additionally, it is impossible to perform the removing and reconnection of the terminal in unattended operation.

Therefore, the present invention intends to provide a method for restoring communication with a USB-equipped device and an apparatus to restore communication with the same in which communication errors between a host computer and a USB-equipped device can be detected wherein the USB-equipped device can perform a measure to restore the communication in relation to the host computer.

A Universal Serial Bus (USB) interface is known as one of the interfaces to connect a computer and peripherals. When a USB-equipped device, such as a mouse or a key board, is connected to a USB terminal of a host computer via a USB cable, the host computer detects an electric change in the USB interface to confirm that the USB-equipped device is connected. The host computer electrically communicates with the connected USB-equipped device (hereafter "USB communication") and confirms the kind of the USB-equipped device based on the response. Thereafter, a USB-equipped device driver corresponding to the kind of the USB-equipped device is loaded such that the USB-equipped device can be controlled, resulting in a plug and play (hereafter "PnP") method in which a USB-equipped device becomes useable by connecting the USB-equipped device to a host computer by a USB cable.

The USB communication can be performed by using two lines, D+ signal line and D- signal line. A USB cable also has a power supply line, which enables power supply from the host computer, and a ground line. In other words, the USB cable and the USB terminal have the above four lines.

There are two methods for power supply with USB-equipped devices. First, power can be supplied from the USB terminal of the host computer via the power supply line of the USB cable (hereafter "bus-powered"). Another method is that the USB-equipped device has its own power supply (hereafter "self-powered"). This self-powered USB-equipped device, having its own power supply, utilizes a commercial power supply, for example, such that a power supply from the host computer is not necessary.

However, the USB-equipped device cannot detect the connection of the USB cable with either methods of power supply. Nonetheless, the bus-powered USB-equipped device loses the power supply once the connection of the USB cable is discontinued (e.g. the cable is physically pulled out). As soon as the connection of the cable is discontinued, all the operation is suspended. In other words, even though the connection of the USB cable cannot be detected, the operation is suspended as soon as the connection is discontinued. Therefore, detection of the connection is not necessary.

However, with the above USB-equipped device having its own power supply, the power supply will be continued after the connection of the USB cable is discontinued such that the operation proceeds. If the connection of the USB cable is detected, a measure to suspend the operation may be performed. However, the USB-equipped device cannot detect the connection of the USB cable such that no measure can be performed to suspend the operation.

In the case of the self-powered USB-equipped device, the operation continues even after the connection with the host computer is ended. In other words, the operation continues even when the USB-equipped device is no longer under the control of the host computer computer.

Other than the time when the USB cable is pulled out, the undesired continuity of the operation as described above may occur when the connection between the host computer and the USB-equipped device is physically discontinued, e.g. the contact failure of the USB connector and the broken USB cable.

The purpose of the present invention is to provide a USB-equipped device which can detect physical discontinuity of the connection between a host computer and the self-powered USB-equipped device.

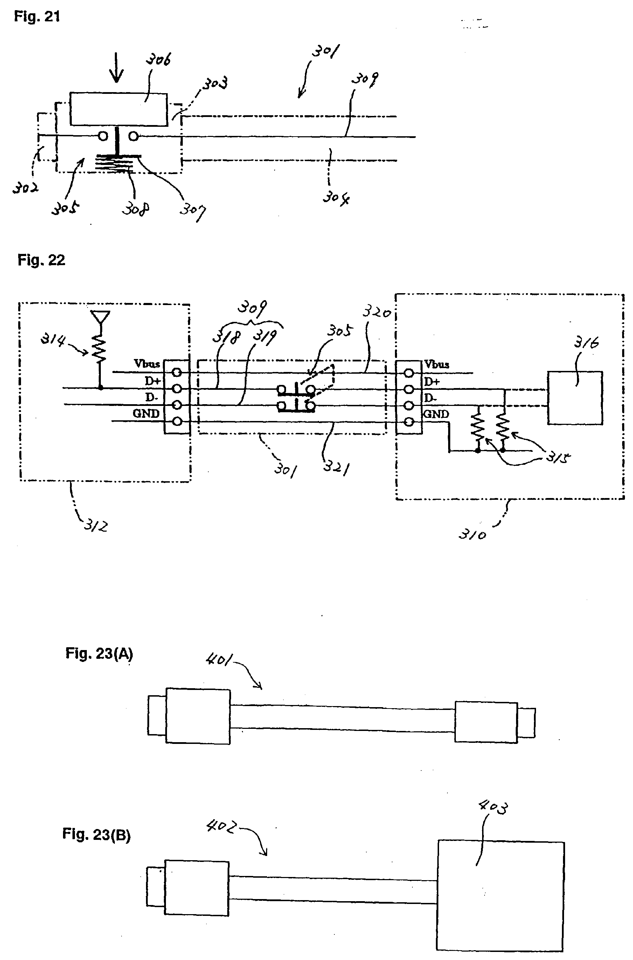

Some types of USB cables include USB cable 401 having USB plugs on both ends as shown in Figure 23(A) and USB cable 402 which is directly derived from USB-equipped device 403 and has a USB plug at one end as shown in Fig. 23(B).

It is known that if the host is correctly operating, it can reconfigure a USB-equipped device by removing and reconnecting a USB cable.

However, by repeatedly removing and reconnecting the USB cable, the contact of the connector is worn by friction, and further, connection failure of the connector may result. In addition, the connector may be damaged when someone removes and reconnects the USB cable. The connection failure and damage of USB cable 401 having USB plugs on both ends are not largely problematic as USB cable 401 is not very expensive such that it can be easily replaced. However, in the case of USB cable 402 which is derived from USB-equipped device 403, USB cable 402 as a part of USB-equipped device 403 needs to be replaced or repaired, resulting in drawbacks such as a high repair cost and inconvenience as the device cannot be utilized during the repair. Further, it is believed that the frequency of removing and reconnection of the USB cable is low in general use. However, during development of a USB-equipped device, removing and reconnection of the USB cable may be frequently performed for reasons such as the USB-equipped device under development does not operate, resulting in the above connection failure and damage.

Therefore, the present invention intends to provide a USB cable which can simulate a condition as if a USB cable is removed and reconnected without an actual physical action such that wearing and damage of a USB connector portion can be avoided.

Various aspects of the present invention are specified in the independent claims. Some preferred features are set out in the dependent claims.

More specifically, a first aspect of the invention provides a USB-equipped device which is given vendor identification and product identification to communicate with a host computer via a USB interface wherein a device identification different from said vendor identification and said product identification is given. Further provided is a method for communication control of said USB-equipped device in which said USB-equipped device is given said device identification by a device such as rotary switch, dip switch, non-volatile memory and the like.

Also provided a method for communication control of said USB-equipped device which establishes a connection from said host computer to said USB-equipped device via said USB interface wherein when said USB-equipped device is plugged in, it transmits said device identification, together with said vendor identification and said product identification, to said host computer; said host computer identifies the model of said USB-equipped device based on said transmitted vendor identification and product identification; and if a plurality of said identified USB-equipped devices are plugged in, a USB-equipped device as a target of communication is identified among said plurality of USB-equipped devices based on said sent device identification such that a connection is established with said USB-equipped device.

Preferably, the host computer assigns said device identification given to said USB-equipped device as a target of communication by giving said assignment to said USB-equipped device as one of the arguments which are called by an application program interface when an application program is executed.

Preferably, said host computer stores said vendor identification, said product identification and said device identification of said plugged in USB-equipped devices in order of being plugged in a form of a control table; a connection is established to each device sequentially as recorded in said control table; and when said device identification sent from said connected USB-equipped device matches a device ID given by an argument of said application programming interface, it is determined that connections to said USB-equipped devices as targets of communication are established.

According to yet a further aspect of the invention, there is provided a method for restoring communication with a USB-equipped device which is connected to a host computer via a USB connector wherein said USB-equipped device has an error detecting means, which detects an error in communication with said host computer, and a voltage changing means which changes the voltage of a signal line connected to said USB connector of said USB-equipped device; and when said error detecting means detects an error in the communication with said host computer, said voltage changing means changes the voltage of said signal line such that a condition, where said USB connector is reconnected to said host computer, is simulated.

Preferably, the voltage changing means has one of the following: a switch between a power supply and said signal line; a switch between the ground and said signal line; or a switch to open and close said signal line.

According to yet another aspect of the invention, there is provided an apparatus to restore communication with a USB-equipped device which is connected to a host computer via a USB connector wherein said USB-equipped device has an error detecting means, which detects errors in communications with said host computer and a voltage changing means which changes the voltage of a signal line connected to said USB connector of said USB-equipped device; and when said error detecting means detects an error in the connection with said host computer, said voltage changing means changes the voltage of said signal line such that a condition, where said USB connector is reconnected to said host computer, is simulated.

According to still another aspect of the invention, there is provided a USB-equipped device which is configured such that it is connected to a host computer via a USB cable, having a signal line and power supply line to communicate with said host computer and that it has its own power supply wherein said USB cable is connected to a connector portion of said USB-equipped device; a voltage detecting portion is connected to a terminal for said power supply line at said connector portion to detect the power supply voltage of said host computer; and a connection of said USB cable can be detected based on the output from said voltage detecting portion.

Preferably, the USB cable has said signal line comprised of a D+ signal line and a D- signal line, said power supply line and a ground line wherein said connector portion of said USB-equipped device has connection terminals corresponding to each line.

The USB-equipped device may operate using said individual power supply wherein said voltage detecting portion in said USB-equipped device provides the output indicating whether a given voltage exists to a control portion of said USB-equipped device such that when disconnection of said USB cable is detected, the operation of said USB-equipped device is suspended.

According to a still further aspect of the invention, there is provided a USB data cable having a USB plug which connects a host computer with a USB-equipped device wherein a signal line in said USB data cable having said USB plug has a switch to generate an electric change in said signal line; and said switch can be controlled externally.

According to a yet still further aspect of the invention, there is provided a USB data cable having a USB plug which connects a host computer with a USB-equipped device, receiving power supply from said host computer, wherein a signal line in said USB data cable having said USB plug has a switch to open and close a power supply line; and said switch can be controlled externally. The switch may turn on and off said signal line.

The USB data cable may have a D+ signal line and a D- signal line wherein said switch generates an electric change in said D+ signal line and said D- signal line.

Preferably, the switch is formed in a housing of said USB plug and has an operating portion which to be pressed.

Various aspects in which the invention is embodied will now be described, by way of example only, and with reference to the accompanying drawings of which:
Fig. 1 is a schematic configuration of a system in which the present invention is embodied.
Fig. 2 is a schematic view of an API to which an argument is given to assign a USB-equipped device identification of a USB-equipped device in the system of Fig. 1.
Fig. 3 is a system in which multiple USB-equipped devices of the same product (or model) are connected to a host computer via a USB interface.
Fig. 4 is a schematic flowchart of operation from plug-ins of USB-equipped devices to establishment of connections in the system of Fig. 3.
Fig. 5 is a system in which an identical USB-equipped device identification is mistakenly assigned to connected devices.
Fig. 6 is a configuration of a control table which is stored in the host computer in the system of Fig. 5.
Fig. 7 is a schematic configuration of a conventional system in which a host computer and USB-equipped devices are connected via a USB interface.
Fig. 8 is a flowchart showing operation to plug in USB-equipped devices in the system of Fig. 7.
Fig: 9 is a schematic circuit configuration of an apparatus to restore communication with a USB-equipped device.
Fig. 10 shows circuit connections in the vicinity of a USB connector.
Fig. 11 is a flowchart showing USB communication and the restoration process thereof.
Fig. 12 is a schematic circuit configuration of another embodiment of an apparatus to restore communication with a USB-equipped device.
Fig. 13 is a schematic circuit configuration of yet another apparatus to restore communication with a USB-equipped device.
Fig. 14 is a schematic circuit configuration of yet another apparatus to restore communication with a USB-equipped device of the present invention.
Fig. 15 is a flowchart showing a conventional restoration process for errors in the USB communication by the host computer.
Fig. 16 is a schematic configuration of an embodiment of a USB-equipped device according to the present invention.
Fig. 17 is a flowchart showing the operation of a CPU with the USB-equipped device.
Fig. 18 is a schematic configuration in which a low speed USB-equipped device is connected to a host computer via a USB data cable having a USB plug.
Fig. 19 is a schematic configuration of an example of the USB data cable having a USB plug.
Fig. 20 is a side view indicating when a switch is not pressed.
Fig. 21 is a side view indicating when the switch is pressed.
Fig. 22 is a schematic configuration in which a high speed USB-equipped device is connected to a host computer via a USB data cable having a USB plug.
Fig. 23 is a schematic configuration of a conventional USB data cable having a USB plug. Fig. 23(A) is a type having USB plugs on both ends. Fig. 23(B) is a type which is directly derived from the USB-equipped device and has a USB plug on one end.

The first embodiment relates to a USB-equipped device and a method for communication control thereof in which even when some of multiple USB-equipped devices connected to a host computer via a USB interface carry identical vendor identifications (VIDs) and product identifications (PIDs), a connection can be established by identifying those IDs.

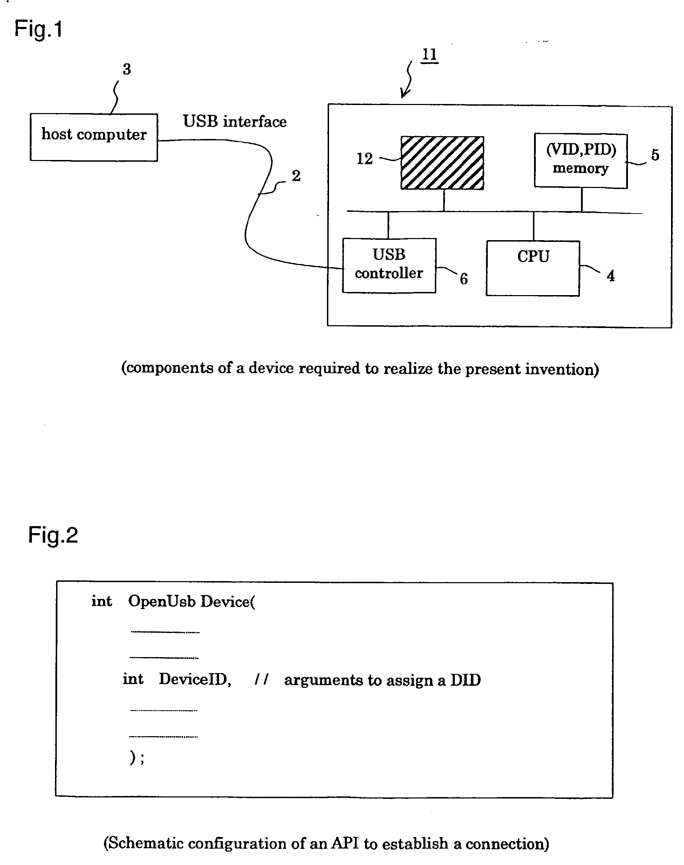

Fig. 1 shows a schematic configuration of a USB-equipped device 11 that has CPU 4, memory 5, and USB controller 6, similar to the USB-equipped device in Fig. 7. Memory 5 stores a VID and PID of the device. In addition, device 11 of this embodiment has device identification (hereafter, "DID") setting apparatus 12. DID setting apparatus 12 is comprised of a rotary switch, dip switch, a non-volatile ROM and the like and gives a given DID to USB-equipped device 11.

When an application program for each USB-equipped device, stored in the memory (not shown in the figure) of host computer 3, is executed, an application program interface (hereafter "API") is called. The API assigns a DID to a USB-equipped device as a target of communication. In other words, assignment of a DID is performed by giving the assignment to the USB-equipped device as one of arguments called by the API. A schematic configuration of such an API is shown in Fig. 2.

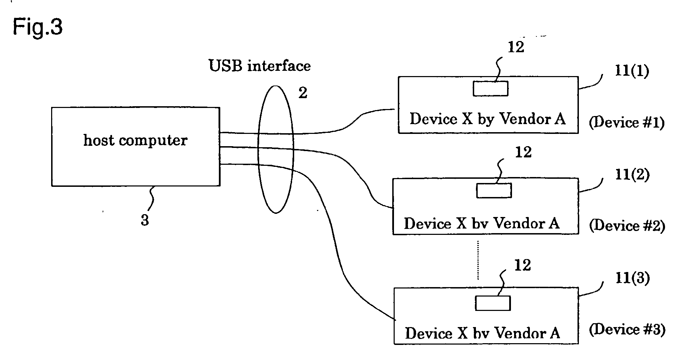

Suppose multiple USB-equipped devices of the above configuration are plugged in, as shown in Fig. 3. If the USB-equipped devices are the same product (or model) manufactured by the same vendor, VIDs and PIDs of device 11(1), device 11(2), and device 11 (n) (wherein the "n" indicates a positive integer) are identical. In this example, device 11(1) receives a DID "1", device 11(2) receives a DID "2", and device 11 (n) receives a DID "n", accordingly.

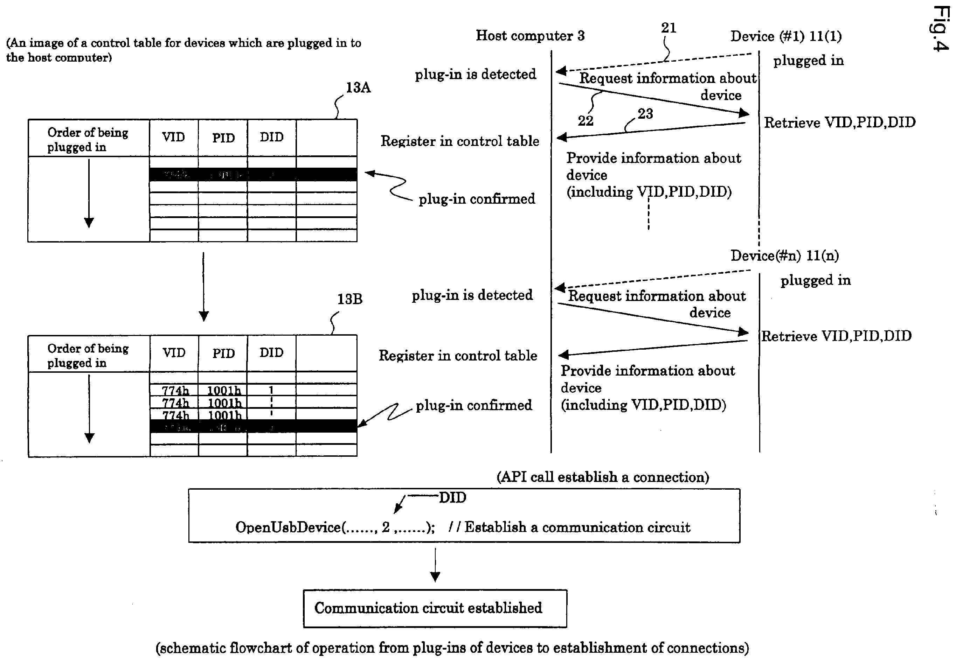

Fig. 4 shows the process of establishing a connection between host computer 3 and device 11(1) through device 11(n). For example, when device 11(1)
is plugged in (arrow 21), host computer 3 transmits the USB-equipped device a request for transmitting IDs (arrow 22). Device 11(1) retrieves its VID and PID from memory 5 under the control of CPU 4. The USB-equipped device also retrieves its DID, which is "1" in this case, from the DID setting apparatus and transmits the IDs to host computer 3.

When host computer 3 receives the above information, its operating system loads a hardware device driver specified by the VID and PID as a part of its functionality. Control table 13, in which VIDs, PIDs and DIDs are stored in order of devices being plugged in, is developed in the memory. Accordingly, the plug-in process of device 11(1) is completed. Similarly, the plug-in process of device 11 (n) is completed, such that control table 13B is developed in the memory of host computer 3.

Host computer 3 then executes the application program during establishment of a connection with each device. By calling the hardware device driver, the product (or model) of the device as a target of communication (VID and PID) is specified. In this example, as shown in Fig. 3, devices of "n" number of the same model, devices 11(1) through 11(n) are plugged in wherein their hardware device drivers are the same. Therefore, the device as a target of communication cannot be specified.

According to a DID given by an argument of the API, device as a target of communication is specified from devices of "n" number to establish a connection. In Fig. 4, a configuration of API 14, which establishes a connection by specifying device 11(2) having a DID of "2", is indicated in a box.

In general, the plug-in process of multiple USB-equipped devices having identical VID and PID is rare. Therefore, a connection can be established with USB-equipped devices according to the order of control table 13B, for example, and confirm whether the DID of the USB-equipped device, with which a connection is established, matches the DID given by an argument of the API. If they match, it is confirmed that a connection with a USB-equipped device as a target of communication is established such that the control shifts to the next process. If they do not match, the same process is repeated until a connection is established with a USB-equipped device carrying a matching DID.

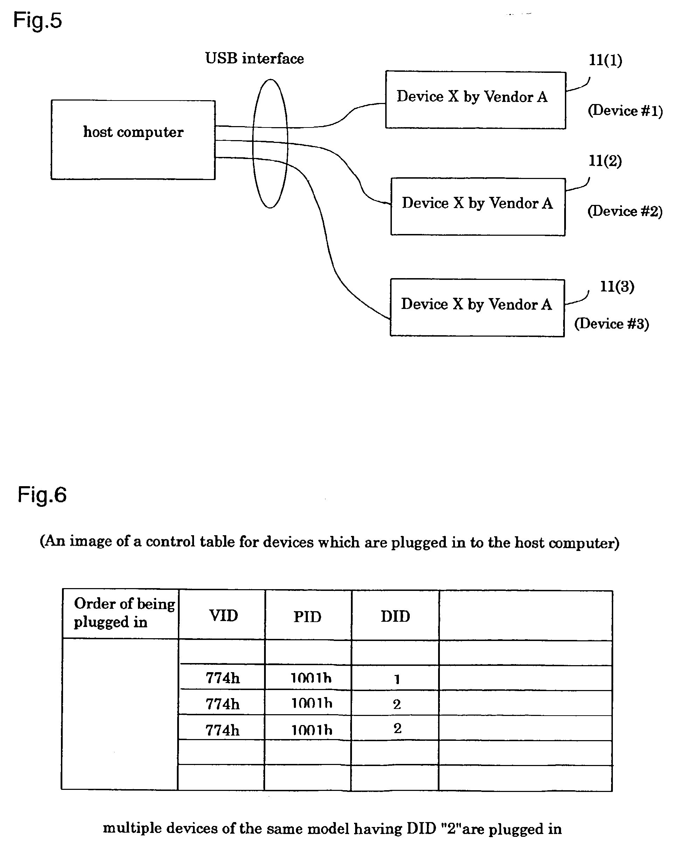

As shown in Fig. 5, an error in setting the DID for devices 11(1) through 11 (n) of the same model may cause assignment of a DID "2" to two devices 11(2) and 11(n), for example. In this case, the control table may look like the one in Fig: 6. There are two major methods to solve the above situation:
(1) to establish a connection by considering a USB-equipped device, which meets the condition first during the process of specifying the USB-equipped device as a target of communication, that is a USB-equipped device having matching VID and PID, as a USB-equipped device as a target of communication; and
(2) to give up establishment of a connection by notifying an operator that there is an error in the setting of the DID by some means, such as showing an error message.

When only one USB-equipped device of the product (or model) is plugged in, the process of checking the DID can be omitted from the operation to specify a USB-equipped device as a target of communication.

Such a control form can be established by modifying the specifications of the application software of the host computer which controls the USB-equipped devices.

By giving a DID to each USB-equipped device, USB-equipped devices having the same VID and PID can be distinguished based on the DID. Therefore, the host computer always specifies a USB-equipped device to be controlled via the USB interface such that a desired communication control can be performed.

Further, a DID is given to each USB-equipped device, therefore, even when USB-equipped devices are of different models, the same hardware device driver can be assigned for USB-equipped devices which share a basis of a 'communication protocol. In other words, USB-equipped devices of different products (or models) can be handled as USB-equipped devices of the same product (or model).

The second embodiments relate to a method for restoring communication with a USB-equipped device and an apparatus to restore communication therewith. More specifically, the present invention relates to improvement in operation of communication failure between a host computer and a USB-equipped device.

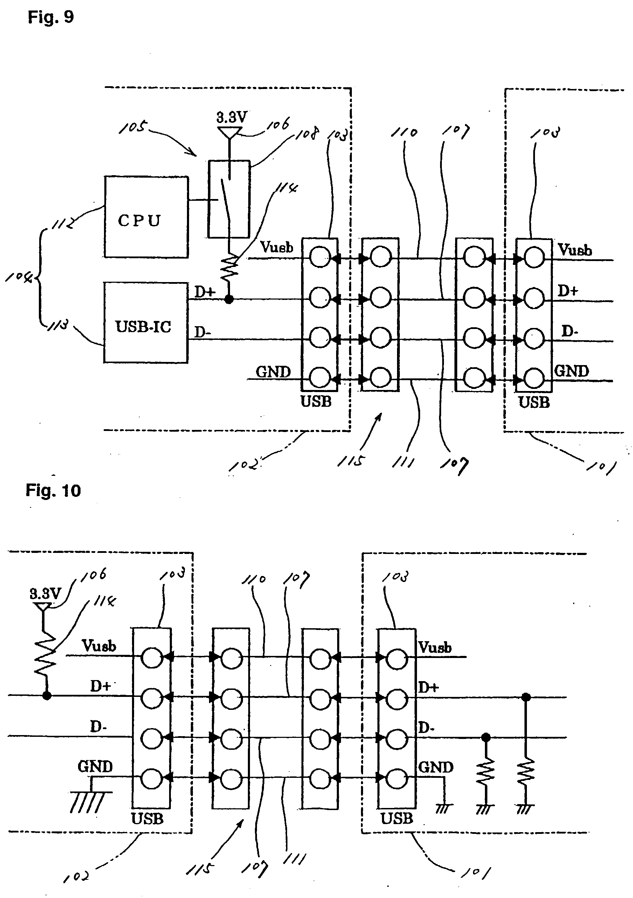

Figs. 9 through 11 show that USB connectors 103, 103 of host computer 101 and USB-equipped device 102 in Figure 9 are connected to each other via USB cable 115 to enable communication. USB-equipped device 102 has error detecting means 104 and voltage changing means 105. When error detecting means 104 detects a communication error with host computer 101, voltage changing means 105 changes the voltage of signal line 107 to create a simulated condition in which USB cable 115 is removed and reconnected.

As shown in Figures 9 and 10, USB cable 115, which connects host computer 101 and USB-equipped device 102, corresponds to the low speed and the high speed. In spite of a slight difference, such as the high speed cable's need of a shielded line while the low speed cable does not require it, both the high speed cable 21 and the low speed cable have four lines, including power supply line 110 (Vusb), ground line 111 (GND), and two signal lines 107, 107 (D+, D-). Further, USB connectors 103, 103 of host computer 101 and USB-equipped device 102 are connected to each other via USB cable 115 having a widely adapted terminal.

Signal lines 107, 107 are for correspondence of commands and signals between host computer 101 and USB-equipped device 102 and are comprised of two lines, D+ and D-, for the USB, as shown in the figures. In addition, USB-equipped device 102 pulls up one of signal lines 107, 107 depending on the configuration of USB-equipped device 102, either the high speed (12Mbps) or the low speed (1.5 Mbps). For example, with a USB-equipped device having the high speed configuration of this embodiment, signal line 1.07 of D+ is pulled up by power supply
106 in USB-equipped device 102 as shown in Figs. 9 and 10 while nothing is connected to D- signal line 107. On the other hand, with host computer 101, both D+ and D- signal lines 107, 107 are pulled down to the ground such that the potential is zero.

Power supply line 110 of the above four lines functions as a line to supply power from host computer 101 to USB-equipped device 102. Additionally, ground line 111 has its both ends grounded.

Error detecting means 104 can determine whether communication with host computer 101 is enabled based on the communication operation while detecting a communication error with host computer 101. For example, in this embodiment, such operation is performed by at least one CPU 112, USB-IC 113 and the memory, a given control or operating (or arithmetic) program (not shown in the figures). USB-IC 113, configured by a circuit to control the USB, monitors the signal communication in signal lines 107, 107, or sends signals received from host computer 101 to CPU 112. In this embodiment, USB-IC 113 and CPU 112 are separately shown in the figures. However, they can be formed separately as shown in the figures or USB-IC 113 may be contained in CPU 112 to have a one-chip configuration.

Voltage changing means 105 changes the voltage of signal line 107 of USB-equipped device 102. In this embodiment, voltage changing means 105 has switch 108 to disconnect the supply of power from power supply 106 for pulling up to signal line 107 corresponding to signals from CPU 112. Switch 108 is placed between power supply 106 and signal line 107, as shown in the figures, and opens or closes the switch terminal upon a command from CPU 112. Power supply 106, connected to signal line 107, is 3.3V. In addition, resistance 114 of 1.5 kΩ at 5%, which is required for the USB configuration, is placed between power supply 106 and signal line 107.

With USB-equipped device 102 of the above configuration, even when an error occurs in the USB communication with host computer 101, the USB communication can be actively restored by means of its own function using error detecting means 104 and voltage changing means 105 (Fig. 9).

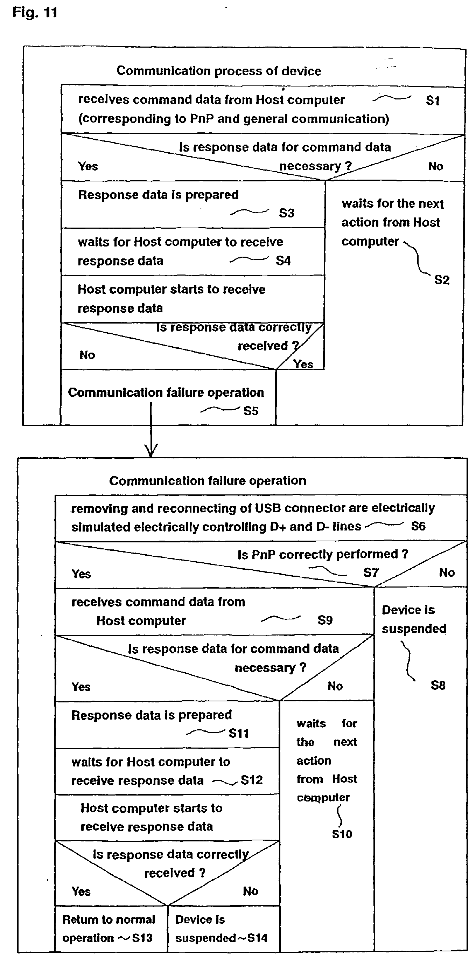

When the USB communication is started between host computer 101 and USB-equipped device 102, switch 108 of USB-equipped device 102 is closed, and power supply 106 is connected. Thereafter, the voltage of 3.3V is applied to a given side of two signal lines 107,107 (D+ in this embodiment). Host computer 101 detects that the voltage is applied to D+ signal line 107 and determines that connected USB-equipped device 102 is for the high speed. The USB communication then takes place between host computer 101 and USB-equipped device 102 (Fig. 11).

USB-equipped device 102 receives a command (command data) from host computer 101 (Step 1). If response data is not necessary, the USB-equipped device waits for the next command from host computer 101 after executing the command (Step 2). If the response data is necessary, USB-equipped device 102 prepares the response data (Step 3) and waits for host computer 101 to obtain the data (Step 4). When the data is correctly obtained, the USB-equipped device waits for the next command from host computer 101 (Step 2). However, when an error occurs in the USB communication with host computer 101, the information that the data is correctly obtained by the host computer 101 is not available. Herein, CPU 112 confirms the communication error, and communication failure operation is started (Step 5).

The communication failure operation of this embodiment is performed by restoration of the communication by USB-equipped device 102. Herein, CPU 112 of USB-equipped device 102 sends a command signal to switch 108 to open and close the contact. When switch 108 opens the contact upon the command, the 3.3V voltage to D+ signal line 107 is suspended while the potential of D+ signal line 107 grounded on the host computer side becomes zero. Therefore, host computer 101 determines that the both D+ and D- signal lines 107, 107 have zero potential. In other words, host computer 101 perceives the condition as if nothing were connected thereto, as though USB connector 103 of USB-equipped device 102 were removed.

When switch 108 is closed, the 3.3V voltage is reapplied to D+ signal line 107 such that host computer 101 detects the voltage. As the result, host computer 101 perceives as if USB-equipped device 102 were newly connected to the terminal to which nothing had been connected (Step 6). Herein, host computer 101 tries to establish the system by communication to establish the PnP with USB-equipped device 102. However, if the USB communication with host computer 101 is not restored by the above process, USB-equipped device 102 operates suspension operation (Step 8). In this case, the communication is not restored by its own process of restoration such that USB-equipped device maintains the suspension until some support is provided from the outside.

On the other hand, if the PnP is correctly executed in Step 7, the USB-equipped device receives a command (command data) from host computer 101 (Step 9). If no response to the command is necessary, the USB-equipped device 102 waits for the next command from host computer 101 (Step 10). If a response is necessary, the response data is returned to host computer 101, and the USB-equipped device 102 awaits host computer 101 to receive the response data (Step 11 and 12). When it is confirmed that the response data is correctly received, the USB-equipped device 102 returns to the normal operation (Step 13). If it is not confirmed, the USB-equipped device 102 operates the suspension operation similarly as in Step 8 (Step 14).

As described above, USB-equipped device 102 of this embodiment has a self-restoring function in which signal line 107 is disconnected in the case of a communication error such that it appears as if USB connector 103 of USB-equipped device 102 were removed and reconnected in relation to host computer 101. Therefore, USB-equipped device 102 can automatically and actively perform a self restoring operation in the case of communication errors. In other words, removing and reconnecting USB connector 103 of USB-equipped device 102 is not needed. Also, self restoration in the case of unattended operation is possible.

The above is one of the most preferable embodiments of the present invention, however, one may not be limited to the above. Various modifications are possible within the scope of the present invention. For example, the above embodiment describes the case in which the voltage to signal line 107 is suspended. However, a means to cause a change in the voltage in signal line 107 is not limited to the above. Other examples include changing a position of switch 108. In this case, a voltage of 3.3V is constantly applied to D+ signal line 107 of USB-equipped device 102 wherein D+ signal line 107 can be disconnected by switch 108 placed between power supply 106 and USB connector 103. Therefore, the potential of D+ signal line of host computer 101 can be changed by opening switch 108 in the case of a communication error.

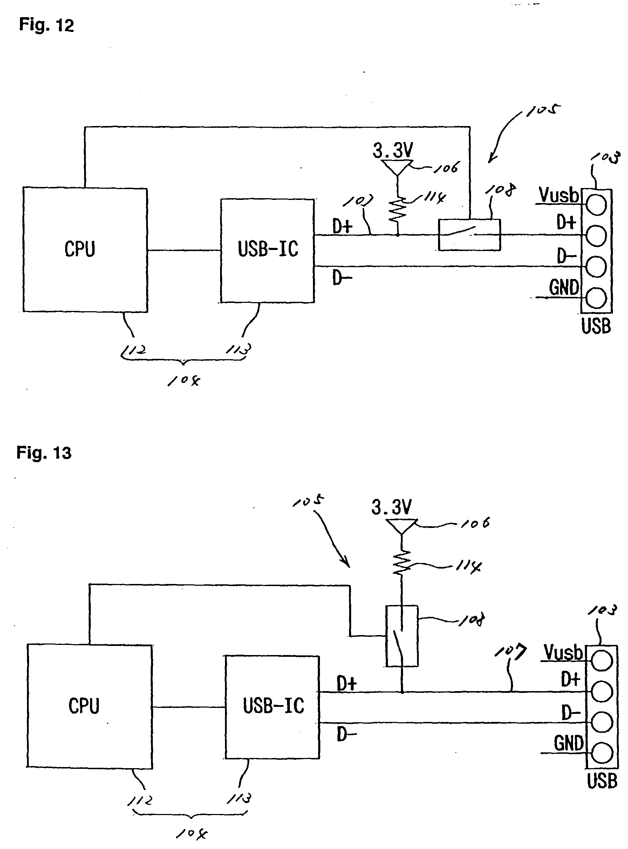

Additionally, switch 108, placed between power supply 106 and resistance 114 in Fig. 9, can be placed between resistance 114 and signal line 107 as shown in Fig. 13. With this position of switch 108, application of the voltage from the power supply to signal line 107 can be suspended such that the voltage of signal line 107 can be changed.

Another example is, as shown in Fig. 14, to place switch 108 between signal line 107 and ground 109. In this case, signal line 107 is grounded only when a communication error occurs such that the potential of the entire signal line 107 becomes zero. In other words, to cause a change in the voltage of signal line 107, the voltage from the power supply to signal line 107 is disconnected in configurations discussed the above while switch 108 switches between the ground position and non-ground position of signal line 107 as shown in Fig. 14. In this case, signal line 107 grounded in host computer 101 can be also placed in USB-equipped device 102.

In the above configurations, a part of the circuit is disconnected by a switch, such as an electric switch which opens and closes upon a command from CPU 112. However, one may not be limited to this embodiment. For example, a transistor, an analog switch, and an FET (Field effect transistor) can be used as the electric switch. In addition, the switch can be such that it electrically or magnetically opens and closes the contact such as in a relay.

Moreover, the function to disconnect the part of the circuit can be replaced with a function to tum on or off power supply 106 for pulling up. By turning off power supply 106, the potential of D+ signal line 107 can be changed.

The above embodiments described possibilities of two configurations in relation to USB-IC 113 and CPU 112, either separated or CPU 112 containing USB-IC 113 as one chip. However, configurations other than these can be obtained. For example, voltage changing means 105, USB-IC 113, and CPU 112 can be all separately formed, or voltage changing means 105 can be contained in USB-IC 113 to form a two chip configuration together with CPU 112. Additionally, voltage changing means 105 is contained in CUP 112 to form a two-chip configuration with USB-IC 113. Further, USB-IC 113 can be contained in CPU 112 while voltage changing means 105 is added to the outside.

As obvious from the above, a method for restoring communication with a USB-equipped device of this invention can simulate a condition in which a USB connector is reconnected by changing the voltage in the signal line with a voltage changing means when an error detecting means detects a communication error with a host computer computer. As a result, the host computer detects the change in the voltage such that communication for the PnP to establish the system is started. Therefore, the communication can be restored without removing or reconnecting the connector. Also, self-restoration is enabled in the case of unattended operation.

In a method for restoring communication of this invention, the voltage in the signal line can be changed by one of the following: a switch between the power supply and the signal line; a switch on the signal line; or a switch between the ground and the signal line.

An apparatus to restore communication with a USB-equipped device of this invention can simulate a condition in which a USB connector is reconnected by changing the voltage in the signal line with a voltage changing means when an error detecting means detects a communication error with a host computer. As a result, the host computer detects the change in the voltage such that communication for the PnP to establish the system is started. Therefore, the communication can be restored without removing and reconnecting the connector. Also, self-restoration is enabled in the case of unattended operation.

The third embodiments relate to a USB-equipped device which is connected to a host computer via a USB cable. More specifically, it relates to a USB-equipped device having its own power supply.

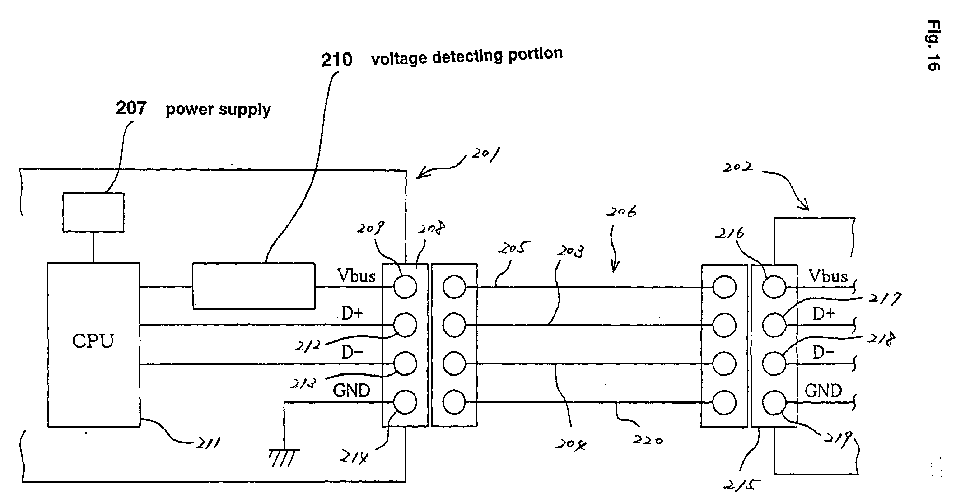

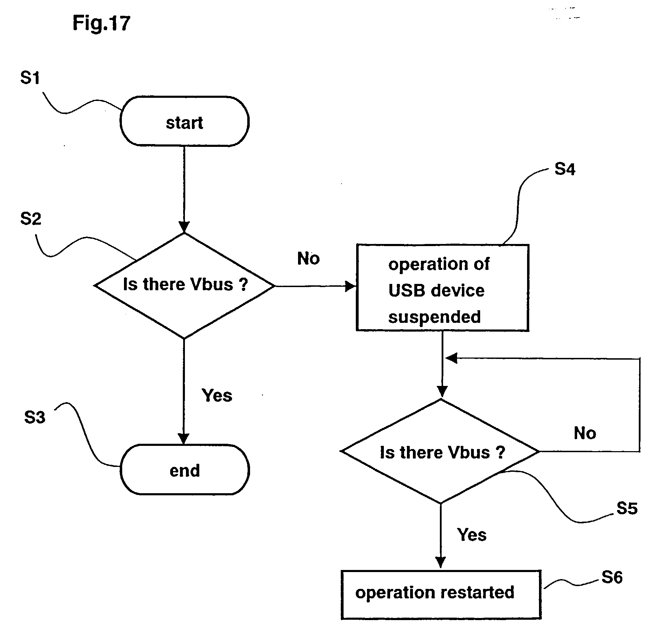

Figs. 16 and 17 show a USB-equipped device 201 connected to host computer 202 via USB cable 206 having signal lines 203, 204, power supply line 205 and ground line 220 to communicate with host computer 202:

In spite of a slight difference, such as the high speed cable requirement of a shielded line while the low speed cable does not require it, USB cable 206 for a high speed device and USB cable 206 for a low speed device both always have signal lines 203, 204, power supply line 205 and ground line 220. Therefore, in this embodiment, the figures show signal lines 203, 204, power supply line 205 and ground line 220, which correspond to a low speed device and a high speed device, and are collectively called USB cable 206.

USB-equipped device 201 has its own power supply 207. Further, voltage detecting portion 210, which detects the voltage of power supply from host computer 202 (Vbus), is connected to Vbus terminal 209 for the power supply line at connector portion 208 of USB-equipped device 201 to which USB cable 206 is connected. The connection of USB cable 206 is determined based on the output of voltage detecting portion 210.

Voltage detecting portion 210 in USB-equipped device 201 provides the output about whether the given voltage exists to CPU 211 as a control portion of USB-equipped device 201. When voltage detecting portion 210 notifies CPU 211 that the given voltage does not exist, CPU 211 determines that the connection of USB cable 206 is physically discontinued such that the operation of USB-equipped device 201 is suspended. As a result, continuation in the operation of USB-equipped device 201 can be prevented when USB cable 206 is pulled out from host computer 202 or USB-equipped device 201 such that USB-equipped device 201 is prevented from operating outside the control of host computer 202.

In addition to the USB cable being pulled out, USB-equipped device 201 is prevented from operating outside the control of host computer 202 when the connection between host computer 202 and USB-equipped device 201, Vbus, is physically discontinued, such as in the case of the contact failure of USB cable 206 with USB connector portions 208 and 215 and the broken USB cable 206.

Voltage detecting portion 210 uses an IC chip for voltage detection. In this embodiment, an IC chip for voltage detection is used as voltage detecting portion 210. However, one may not be limited to the above. A discrete configuration may be formed by using a transistor and an FET (Field effect transistor), or a comparator may be used. Additionally, an AD converter can be used (either attached from the outside or contained therein) to permit CPU 211 to determine the voltage. As described above, a known or new voltage detecting means can be adapted. In addition, power supply 207 of the USB-equipped device 201 can be the one to be supplied from a 100 V AC commercial power supply or a battery.

Connector portion 208 of USB-equipped device 201 has Vbus terminal 209 for the connection of the power supply line, terminals for the two signal lines 212 and 213 and terminal for the ground line 214. Terminals for the signal lines 212 and 213 are terminal for the D+ signal line 212 and terminal for the D- signal line 213. USB connector portion 215 of host computer 202 similarly has terminal for the ground line 216 to output Vbus, terminal for the D+ signal line 217, terminal for the D- signal line 218, and terminal for the ground line 219. In addition, USB cable 206 to connect USB-equipped device 201 and host computer 202 has power supply line 205, D+ signal line 203, D- signal line 204, and ground line 220 wherein each line connects the corresponding terminals of USB-equipped device 1 and host computer 2.

In this embodiment, USB-equipped device 201 is either low speed or high speed. In the case of the low speed device, although not shown in the figures, USB cable 206 should be for low speed while a pull-up is established to a 3.3V line by using a 1.5 KΩ resistance at 5% on D- signal line 204 in USB-equipped device 201. In the case of the high speed device, USB cable 206 should be for high speed while a pull-up is established to a 3.3V line by using a 1.5 KΩ resistance at 5% on D+ signal line 204 in USB-equipped device 201. In either case, the USB communication is performed by using both D+ signal line 203 and D- signal line 204.

Operation of the above USB-equipped device 201 is described in relation to a flowchart of Fig. 17. USB-equipped device 201, including CPU 211, operates on the power supplied from its own power supply 207. CPU 211 of USB-equipped device 201 performs a routine to confirm the connection of USB cable 206 as necessary (e.g. in every given time period) (Step 1). CPU 211 determines whether the voltage of the power supply from host computer 20 (Vbus) exists based on the output from voltage detecting portion 210 (Step 2). If CPU 211 determines that Vbus exists (Step 2: Yes), it is determined that USB cable 206 is connected. The routine is completed, then the original operation of USB-equipped device 201 is continued (Step 3).

CPU 211 determines whether Vbus exists based on the output from voltage detecting portion 210 (Step 2). If CPU 211 determines that Vbus does not exist (Step 2: No), it is considered that the connection of USB cable 206 is physically disconnected for some reason such that the operation of USB-equipped device 201 is suspended (Step 4). Accordingly, one can prevent USB-equipped device 201 from continuing the operation outside the control of host computer 202 when the connection of USB cable 206 is discontinued.

Further, by warning a user that the USB connection is discontinued in Step 4 by a message, such as a sound or communication, it permits that the USB connection can be artificially restored and that human errors can be found earlier.

CPU 211 determines again whether Vbus exists based on the output from voltage detecting portion 210 as necessary (Step 5). If CPU 211 determines that Vbus does not exist (Step 5: No), the operation is continuously suspended. If CPU 211 determines that Vbus exists (Step 5: Yes), it determines that USB cable 206 is reconnected. Accordingly, the operation of USB-equipped device 201 is restarted, or USB-equipped device 201 is initialized (Step 6).

According to the above USB-equipped device 201, the connection of USB cable 206 can be confirmed during the initializing process. In other words, the connection of USB cable is confirmed when USB-equipped device is ready for USB communication after power is supplied to USB-equipped device 201 (the power supply is turned on) followed by initialization started by CPU 211. Herein, if the connection of USB cable 206 is confirmed, the communication for PnP is started. If it is determined that USB cable 206 is not connected, the operation is awaited until USB cable 206 is connected.

The above is a preferable embodiment of the present invention. However, one may not be limited to the above, but various modifications are applicable within the scope of the present invention. For example, the USB cable in the above embodiment has two signal lines 203 and 204, power supply line 205 and ground line 220 which are applicable for both a low speed device and a high speed device to be compliant with the current USB standard. However, one may change the configuration of USB cable 206 as the USB standard changes and the like. Herein, disconnection of power supply line 205 can be still detected based on the output from voltage detecting portion 210 such that USB-equipped device 201 is suspended.

As obvious from the above, the USB-equipped device of this invention can detect the connection of the USB cable based on the output from the voltage detecting portion. Therefore, when the connection between the host computer and the USB-equipped device is discontinued, such as when the USB cable is pulled out from the connector portion of the host computer or the USB-equipped device, the disconnection is detected such that the USB-equipped device operations are suspended.

In addition, the USB-equipped device of this invention can establish the USB communication by using two signal lines, D+ and D-.

Moreover, the USB-equipped device of this invention can suspend its operation when it is detected that the connection of the USB cable is discontinued.

The fourth embodiments relate to a cable to connect a host computer and peripherals. More specifically, it relates to a USB data cable having a USB-standardized plug to connect a host computer and a USB-equipped device.

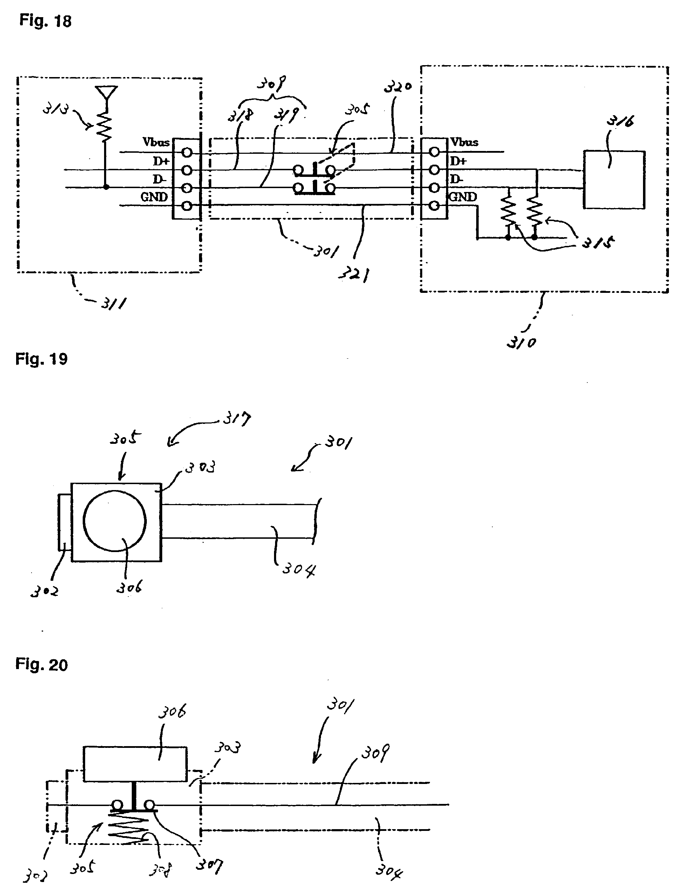

Figs. 18 through 22 show a USB cable. USB cable 301 connects host 310 with USB-equipped devices 311 and 312 and has switch 305 which generates an electric change in signal line 309 and which can be controlled externally. By controlling switch 305 externally, one can simulate a condition as if USB cable 301 were removed and reconnected without an actual action.

USB cable 301 is comprised of cable portion 304 and USB plug 317 which is formed on at least one of ends of cable portion 304. However, USB cable 301 is not limited to a type shown in Figure 23(A), in which USB plugs 317 are formed on both ends of cable portion 304, or another type shown in Figure 23(B) which is directly derived from USB-equipped devices 311 and 312. Switch 305 can be formed with either type of USB cable 301; and USB cable 301 indicates the both types.

Moreover, plug 317 has connecting portion 302, which is connected to connector portions of host 310 or USB-equipped devices 311 and 312, and housing 303.

As shown in Figs. 20 and 21, switch 305 is comprised of: operating portion 306 which is exposed to the outside of housing 303 of plug 317; switch element 307 which connects or disconnects signal line 309 together with operating portion 306; and spring member 308 which applies force to switch element 307 to connect signal line 309. Under normal circumstances, when there is no outside force applied, as shown in Fig. 20, spring member 308 applies force to operating portion 306 and switch element 307 in housing 303 such that electricity flows in signal line 309. This circumstance is called a condition with the closed line. Switch element 307 is disconnected from signal line 309 by pressing operating portion 306 externally as shown in Fig. 21. This is called a condition with the open line. Further, the outside force is lifted from operating portion 306, switch element 307 returns to the original position shown in Fig. 20 by the force applied by spring member 308 such that electricity flows back in signal line 309. In other words, switch 305 is a push-off switch which automatically returns to the original position such as a Tact (phonetic translation) Switch (manufactured by Alps Denki KK).

USB communication is performed by using two signal lines 309, D+ signal line 318 and D- signal line 319. In addition, cable portion 304 has power supply line (Vbus) 320, which supplies power from host computer 310 to USB-equipped devices 311 and 312, and ground line (GND) 321. Under the current standard, there is USB communication of two speeds, low speed of 1.5 Mbps and high speed of 12 Mbps.

In spite of a slight difference (such as the high speed cable's need of a shielded line while the low speed cable does not require it), both the high speed cable and the low speed cable have four lines, including power supply line 320, D+ signal line 318, D- signal line 319 and ground line 321. USB cable 301 of this embodiment is a cable for both the low speed device and the high speed device having the four lines, power supply line 20, D+ signal line 318, D- signal line 319 and ground line 321.

USB-equipped device 311 shown in Fig. 18 is a low speed device (hereafter "LS"), and USB-equipped device 312 shown in Fig. 22 is a high speed device (hereafter "FS").

In the case of the LS, as shown in Fig. 18, the USB specification designates that D- signal line 319 is connected to a 3.3V line with pull-up resistance 313 inside USB-equipped device 311. In the case of the FS, as shown in Fig. 22, it is designated such that D+ signal line 318 is connected to a 3.3V line with pull-up resistance 314 inside USB-equipped device 312. According to the USB specification, pull-up resistance 313 and 314 are 1.5 KΩ at 5%.

D+ signal line 318 and D- signal line 319 of host computer 310 are connected to ground line 321 with pull-down resistance 315. Therefore, when USB-equipped devices 311 and 312 are not connected, D+ signal line 318 and D- signal line 319 have the ground level potential. According to the USB specification, pull-down resistance 315 is 1.5 KΩ at 5%.

Switch 305 of USB cable 301 is such that operating portion 306 is shared by forming a mechanism shown in Figs. 20 and 21 on either of D+ signal line 318 and D- signal line 319. By the operation of operating portion 306, D+ signal line 318 and D- signal line 319 as signal lines 309 simultaneously become open or closed,

As shown in Fig. 18, when USB-equipped device 311 is connected to host computer 310 via USB cable 301, D- signal line 319 of USB-equipped device 311 is pulled up to the 3.3V line. Therefore, D- signal line 319 of host computer 310, which had the ground level potential before the connection, comes to have a plus potential. USB controlling portion 316 of host computer 310 detects the change in the potential to confirm that USB-equipped device 311 is now connected.

As shown in Fig. 22, when USB-equipped device 312 is connected to host computer 310 via USB cable 301, D+ signal line 318 of USB-equipped device 312 is pulled up to the 3.3V line. Therefore, D+ signal line 318 of host computer 310, which had the ground level potential before the connection, comes to have a plus potential. USB controlling portion 316 of host computer 310 detects the change in the potential to confirm that USB-equipped device 312 is now connected.

Switch element 307 can be separated from D+ signal line 318 and D- signal line 319 by pressing operating portion 306 of USB cable to turn off the electric signal from D+ signal line 318 and D- signal line 319. Herein, D+ signal line 318 or D- signal line 319 of host computer 310, which has the plus potential, comes to have the ground level potential. As a result, for host computer 310, the electric condition appears as if USB cable 301 were disconnected. USB controllng portion 316 detects the change in the potential to illusively confirm that USB-equipped devices 311 and 312 were disconnected.

When the outside force pressing operating portion 306 is removed, switch element 308 returns to the original position by the force applied by spring member 308. As a result, electricity flows through D+ signal line 318 and D- signal line 319 again such that the electric signal corresponding to the FS and LS is turned on. Consequently, for host computer 310, the electric condition appears the same as when USB-equipped devices 311 and 312 are connected. USB controlling portion 316 virtually determines that USB-equipped devices 311 and 312 were reconnected such that the PnP is executed again.

Therefore, even when the removal and reconnection of USB cable 301 is needed, it can be simulated by the operation of switch 305 without actually doing so. Hence, one may resolve the conventional issues such as wear, contact failure and damage of the USB connector portion caused by removing and reconnecting the USB cable.

In this embodiment, D+ signal line 318 and D- signal line 319 can be opened or closed by switch 305 simultaneously. Therefore, simulation of removing and reconnecting USB cable 301 can be carried out by the operation of switch 305 independently on the LS and the FS.

The above is a preferable embodiment of the present invention. However, one may not be limited to the above, and various modifications are adaptable within the scope of the present invention.

For example, switch 305 can be placed elsewhere than at housing 303, such as on cable portion 304. In the case of USB cable 301 which is directly derived from the USB-equipped device, switch 305 can be formed on the body of the USB-equipped device. Accordingly, a user can operate switch 305 at a USB-equipped device which is located closer to the user (e.g. mouse or keyboard) such that readiness in the operation is improved when it is difficult to reach plug 317.

The object of the operation of switch 305 is not limited to signal line 309. Power supply line 320 and ground line 321 may be opened and closed as well as D+ signal line 318 and D- signal line 319 by the operation of switch 305.

In the case of the USB-equipped device which receives power from the host computer (hereafter "bus-powered device"), the operation of the USB-equipped device can be suspended by disconnecting power supply line 320. Such a USB-equipped device can be restarted by reconnecting power supply line 320. Therefore, in the case of a bus-powered device, a condition simulating removing and reconnecting USB cable 301 can be obtained by opening and closing power supply line 320 with switch 305 formed on power supply line 320.

The configuration of switch 305 is not limited to the push-off switch as shown in the above embodiment, as long as operating portion 306 can open or close signal line 309 as desired. For example, signal line 309 can be opened or closed by using a toggle switch or a rotary switch.

Additionally, the configuration of switch 305 is not limited to a mechanical configuration to close and open signal line 309 as long as it can cause an electric change, as if USB cable 301 were removed and reconnected, externally. For example, a variable resistor may be connected to D+ signal line 318 and D- signal line 319 in series. When the resistance value of the variable resistor approaches infinity, D+ signal line 318 and D- signal line 319 become open. The same effect as the mechanical switch can be obtained by operating the variable resistor under this condition. Moreover, two variable resistors having the same resistance value can be separately connected to D+ signal line 318 and D- signal line 319. Herein, USB cable 301 can be used independently on the speed of the device by simultaneously changing the resistance value of the variable resistors connected to D+ signal line 318 and D- signal line 319.

As obvious from the above, according to the USB data cable having a USB plug of this invention, a switch can be operated externally to simulate the electric change in a signal line as if the USB cable were actually removed and reconnected. Accordingly, one may resolve the conventional issues such as wear, contact failure and damage of a USB connector portion of the host computer or the USB-equipped device and the USB cable of the USB-equipped device caused by removing and reconnecting the USB cable.

In the USB data cable having a USB plug which connects the host computer with a USB-equipped device receiving power from the host computer,a switch to open and close a power supply line in the USB cable can be operated externally. By opening and closing the power supply line, the same effect as actually removing and reconnecting the USB data cable can be obtained.

A USB data cable having a USB plug of this invention causes the electric change same as the actual removal and reconnection of the USB data cable by closing and opening the signal line in the USB data cable. Therefore, the configuration of the switch can be simplified.

According to a USB data cable having a USB plug of this invention, a switch can be operated externally to create the electric change same as the actual removal and reconnection of the USB data cable in the D+ signal line and D- signal line which are used for detecting the connection of a USB-equipped device and for data communication. Therefore, the USB data cable can be used for both FS and LS.

According to a USB data cable having a USB plug of this invention, a switch is formed in a housing of the USB plug and has an operating portion which can be operated by pressing. Therefore, a user can readily operate the operating portion which is located close to the user during the use of the USB cable.

## Claims

1. A USB-equipped device having a vendor identification and a product identification for use when communicating with a host computer via a USB interface, wherein the device further has a device identification that is different from the vendor and the product identification, which device identification is to identify the device when it is communicating with the host computer.

2. A USB-equipped device as claimed in claim 1, wherein the device identification is allocated by software in the host computer and transmitted to the USB-equipped device when it is initially connected to the host computer.

3. A USB-equipped device as claimed in claim 1 or claim 2, wherein the device identification is stored in the USB-equipped device in a device such as a rotary switch, a dip switch, non-volatile memory and the like.

4. A method for communication control of the USB-equipped device as claimed in any one of claims 1 to 3, the method comprising:
transmitting the device identification, together with the vendor identification and the product identification, to the host computer when the USB-equipped device is plugged in;
identifying in the host computer the model of the USB-equipped device based on the transmitted vendor identification and product identification; and
identifying a USB-equipped device as a target of communication among a plurality of USB-equipped devices using the device identification transmitted, such that a connection is established with said USB-equipped device.

5. A method for communication control of a USB-equipped device as claimed in claim 4, comprising assigning the device identification in the host computer and transmitting that device identification number to the USB-equipped device.

6. A method as claimed in claim 4 or claim 5, involving storing, preferably in a table, in the host computer the vendor identification, the product identification and the device identification of the plugged in USB-equipped devices, in order of being plugged.

7. A method as claimed in claim 6, further involving establishing a connection to each device sequentially, as recorded in the table; transmitting to the host computer a signal indicative of the device identification of each device as it is connected, comparing the device identification received with that stored in the host computer and confirming a connection to the USB-equipped device is established, when said device identification sent from the connected USB-equipped device matches a device identification in the host computer.

8. A computer system comprising a USB-equipped device having a vendor identification and product identification and a host computer connected to the USB device, the host computer having software for allocating to the USB device a unique device identification that is different from the vendor and the product identification and transmitting that number to the USB device for storage therein, when the USB device is initially connected to the host computer.

9. A computer system as claimed in claim 8, wherein the device identification is provided by a device such as a rotary switch, a dip switch, non-volatile memory and the like.

10. An apparatus for a USB-equipped device for connecting to a host computer via a USB connector, the apparatus having error detecting means for detecting an error in communication with the host computer and voltage changing means for changing the voltage of a signal line connected to said USB connector of said USB-equipped device when a communication error is detected, the voltage changing means being adapted to change the voltage so as to simulate disconnection of the USB connector.

11. An apparatus as claimed in claim 10, wherein the voltage changing means comprise any of a switch connected between the signal line and a power supply; a switch between ground and the signal line; a switch to open and close the signal line.

12. An apparatus as claimed in claim 11, wherein the switch comprises an electric switch and/or a transistor and/or an FET and/or a magnetic switch and/or any other such switch.

13. A USB-equipped device including an apparatus as defined in any of claims 10 to 12.

14. A method for restoring communication with a USB-equipped device which is connected to a host computer via a USB connector, the method comprising:
detecting in the USB-equipped device an error in communication with the host computer,
changing the voltage of a signal line in the USB-equipped device to simulate a condition where the USB connector is disconnected from the host computer and
changing the voltage of the signal line in the USB-equipped device to simulate a condition where the USB connector is re-connected to the host computer.

15. A method as claimed in claim 14, in which the steps of changing involve switching between a position in which a power supply is disconnected from and the signal line, thereby to simulate disconnection of the USB-connector, and a position in which the power supply is connected to the signal line, thereby to simulate re-connection of the USB-connector to the host computer.

16. A method as claimed in claim 14, in which the steps of changing involve switching between a position in which the signal line is connected to ground, thereby to simulate disconnection of the USB-connector, and a position in which the signal line is connected to a power supply, thereby to simulate re-connection of the USB-connector to the host computer.

17. A method as claimed in claim 14, in which the steps of changing involve switching between a position in which the signal line is open, thereby to simulate disconnection of the USB-connector, and a position in which the signal line is closed, thereby to simulate re-connection of the USB-connector to the host computer.

18. A USB-equipped device for communicating with a host computer via a USB cable, the device comprising a power supply line for receiving power from the host computer; a voltage detecting portion connected to the power supply line for detecting the power supply voltage of said host computer; and means for detecting connection of the host system based on the output from said voltage detecting portion.

19. A USB-equipped device as claimed in claim 18 having a D+ signal line, a D- signal line, a ground line and a connector for connecting to corresponding lines in the USB cable.

20. A USB-equipped device as claimed in claim 18 or claim 19, having means for suspending operation of the device when disconnection of said host system is detected.

21. A data cable, preferably a USB data cable having a USB plug, for connecting a host computer to a device, the cable having an externally operable switch along its length, the switch being operable to generate an electric change in the cable.

22. A cable as claimed in claim 21, wherein the switch is operable to generate an electric change in at least one of a power supply line or a signal line.

23. A data cable as claimed in claim 21 or claim 22, wherein the externally operable switch comprises an actuator for opening or closing the switch, the actuator preferably being operable to maintain the switch closed in an equilibrium state.

24. A cable as claimed in claim 23, wherein the actuator is mechanical, for example, spring actuated.

25. A cable as claimed in any one of claims 21 to 23, wherein the switch is electrically operable, for example, the switch may comprise a variable resistor.

26. A cable as claimed in any one of claims 21 to 25, wherein the switch is operable to electrically break at least one line of the cable, so that electrical current cannot pass therethrough.

27. A cable as claimed in any one of claims 21 to 26, in which the switch is provided in a housing of a plug at an end of the cable.
